# EUROPÄISCHE PATENTSCHRIFT

(11) **EP 0 365 961 B1**
(45) Veröffentlichungstag und Bekanntmachung des Hinweises auf die Patenterteilung: **22.09.1993**
(21) Anmeldenummer: 89119150.4
(22) Anmeldetag: 16.10.1989
(51) Int. Cl.: B01D 63/10, B01D 65/00

(54) **Vorrichtung zur Durchführung von Membrantrennprozessen**
Device for carrying out membrane separation processes
Dispositif pour la réalisation des procédés de séparation à membrane

(30) Priorität: 25.10.1988 DE 3836308
(43) Veröffentlichungstag der Anmeldung: 02.05.1990
(73) Patentinhaber: HOECHST AKTIENGESELLSCHAFT, 65926 Frankfurt am Main (DE)
(72) Erfinder: Skaletz, Detlef, Dr., D-6500 Mainz-Bretzenheim (DE)

(56) Entgegenhaltungen:
- EP-A- 0 253 945
- DE-A- 2 514 580
- GB-A- 2 063 705
- US-A- 3 966 616
- US-A- 4 019 988
- US-A- 4 235 723
- US-A- 4 475 973

## Beschreibung

Die Erfindung betrifft eine Vorrichtung zur Durchführung von Membrantrennprozessen, umfassend ein Gehäuse, wenigstens eine innerhalb des Gehäuses angeordnete spiralförmig aufgewickelte Membrantasche, die wenigstens eine Drainageschicht und beidseitig auf dieser aufgebrachte, semipermeable Membranen enthält, einen Abstandshalter zwischen den einzelnen Wickellagen der Membrantasche, eine Sammelleitung, die zentral angeordnet ist, eine erste stirnseitige Öffnung als Einlaß für das zu trennende Gut, eine zweite stirnseitige Öffnung als Auslaß für das Konzentrat sowie eine Ableitung für das in die Sammelleitung gelangte Permeat.

Derartige Vorrichtungen, die im allgemeinen Membranmodule genannt werden, sind in der Literatur bekannt und werden in den verschiedensten Ausführungsformen für verschiedene Anwendungszwecke beschrieben (siehe z.B. Ullmann, Enzyklopädie der technischen Chemie, 4. Auflage, Band 2, S. 188). Gerade bei den spiralförmig aufgerollten Membranelementen bestehen aber bekanntermaßen Probleme insbesondere im Hinblick auf die Abdichtung der Membranelemente in den Seitenbereichen oder im Bereich der Einmündung in die Sammelleitung (Ullmann).

Die DE-A-30 33 800 beschreibt, daß zur Lösung dieser Dichtungsprobleme die das gewickelte Membranelement bildenden Membranen in den seitenrandnahen Bereichen miteinander durch Klebstoffe verbunden werden sollen. Der Einsatz von Klebstoff führt aber bei der Durchführung von Membrantrennprozessen mitunter zu weitreichenden Problemen, insbesondere beim Betrieb oder der Reinigung der Membranelemente bei höheren Temperaturen und/oder mit organischen Lösemitteln, aber auch bei Vorrichtungen, bei denen es wichtig ist, die gesamte Membranoberfläche ökonomisch zu nutzen, und nicht zuletzt auch bei der Durchführung von Trennprozessen im Zusammenhang mit für den Verzehr bestimmten Nahrungs- oder Genußmitteln.

Es bestand daher die Aufgabe, eine Membrantrennvorrichtung der gattungsgemäßen Art zu schaffen, bei der einerseits eine unerwünschte Verunreinigung des hochreinen Permeates mit Trenngut durch eventuelle Undichtigkeiten wirksam verhindert wird, die andererseits die Durchführung von Trennprozessen auch bei erhöhten Temperaturen, insbesondere im Bereich von 45 bis 100 °C, ermöglicht, die darüber hinaus für die Durchführung von Trennprozessen auch in Anwesenheit organischer Lösemittel geeignet ist, die ferner Reinigungsoperationen bei hohen Temperaturen (über 100 °C) und/oder unter Zuhilfenahme organischer Lösemittel zuläßt, bei der die zur Verfügung stehende Membranfläche für den Permeationsprozeß nahezu vollständig ausgenutzt wird und die schließlich auch für Trennprozesse im Zusammenhang mit strengen Reinheitsanforderungen unterworfenen Stoffströmen wie z. B. Nahrungsmitteln geeignet ist.

Diese Aufgabe wird gelöst durch die Vorrichtung der eingangs genannten Gattung, deren kennzeichnende Merkmale darin bestehen, daß der Übertritt des Permeates aus der Membrantasche in die Sammelleitung mit Hilfe federelastischer Elemente von dem mit zu trennendem Gut angefüllten Raum dichtgehalten wird und daß die semipermeablen Membranen in den seitenrandnahen Bereichen der Membrantasche durch Schweißnähte miteinander verbunden sind.

Im Betrieb wird ein zu trennendes Gut (Trenngut), beispielsweise eine Lösung, Brackwasser oder eine Gasmischung, durch den Einlaß in das Gehäuse der erfindungsgemäßen Vorrichtung eingeleitet. Dort tritt das Trenngut sofort in Kontakt mit den spiralförmig aufgewickelten, voneinander durch Abstandshalter getrennten Membrantaschen und strömt parallel zur Sammelleitung an den Membrantaschen entlang in Richtung auf den stirnseitigen Auslaß zu, an dem es das Gehäuse wieder verläßt. Während des Strömvorganges diffundiert ein Teil des Trenngutes, das Permeat, durch die semipermeablen Membranen hindurch in das Innere der Membrantaschen, wo sich die Drainageschicht befindet. Als Drainageschichten eignen sich alle Arten von fluiddurchlässigen Flächengebilden wie Schwammkörper, Gewebe, Vliese, Fasergeflechte und ähnliche, die im wesentlichen die Eigenschaft aufweisen müssen, daß sie einem durch sie hindurchströmenden Medium möglichst wenig Widerstand entgegensetzen. Das Permeat fließt sodann im Inneren der Membrantaschen, den spiralförmigen Windungen folgend, auf die im Zentrum der Wicklung angeordnete Sammelleitung zu und tritt durch in der Sammelleitung angebrachte Durchbohrungen in die Sammelleitung über. Da die Membranen, die zur Bildung der Membrantaschen die Drainageschicht allseitig umhüllen, erfindungsgemäß an den Rändern durch Schweißnähte dicht schließend miteinander verbunden sind und da der Übertritt des Permeates aus den Membrantaschen in die Sammelleitung durch federelastische Elemente abgedichtet ist, wird für die erfindungsgemäße Vorrichtung kein Klebstoff benötigt.

Zwischen den Windungen der einzelnen Membrantaschen sind Abstandshalter angeordnet, die aus dem gleichen oder aus ähnlichem Material bestehen können wie die Drainageschicht im Innern der Membrantaschen.

Die Wahl der semipermeablen Membran richtet sich nach der Art des Trennprozesses. Prinzipiell eignen sich alle marktüblichen symmetrischen, asymmetrischen und/oder integralasymmetrischen (thin film composite) Membranen aus Kunststoff wie z. B. aus verschiedenen Polyamiden, Polyimiden, Polysulfonen oder Polyethersulfonen, Celluloseacetat, Celluloseregenerat o. ä. Membranen aus derartigen Materialien lassen sich leicht an den Rändern auf die erfindungsgemäße Weise verschweißen. Hierzu eignen sich bekannte Verfahren, die entweder mit Hitzebeaufschlagung, Ultraschall- oder Hochfrequenzerzeugung eine Verschweissung bewirken.

Die Erfindung soll nachfolgend anhand der beigefügten Figuren 1 bis 3 beispielhaft näher erläutert werden.

Figur 1 zeigt einen senkrechten Schnitt durch ein Segment der Sammelleitung, an dem zwei Membrantaschen erfindungsgemäß befestigt sind.

Figur 2 zeigt einen parallel zur Längsachse der Sammelleitung verlaufenden Schnitt durch die Sammelleitung an einer Stelle, an der das Permeat übertritt, gemäß der Linie II-II in Figur 1.

Figur 3 zeigt eine Aufsicht auf eine Clipanordnung einer Steckleiste gemäß dem Pfeil III in Figur 2.

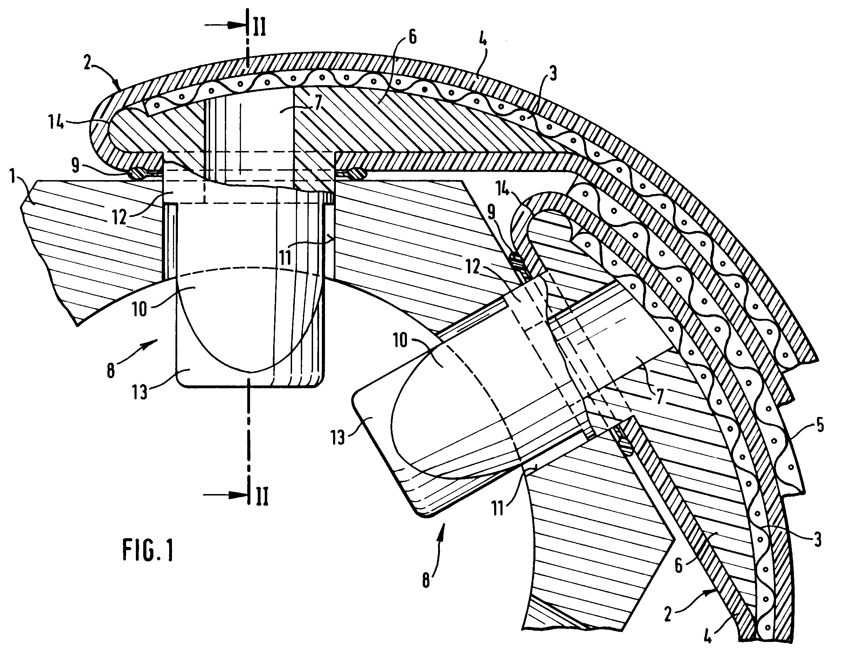

Im einzelnen ist in Figur 1 zu sehen, daß die Sammelleitung 1 in der dargestellten Ausführungsform einen inneren runden Querschnitt und eine äußere sechseckige Formgebung besitzt. An dem dargestellten Segment der Sammelleitung 1 sind zwei Membrantaschen 2 angebracht, die eine Drainageschicht 3 und beidseitig dazu angeordnete semipermeable Membranen 4 umfassen. Zwischen den Membrantaschen 2 ist ein Abstandshalter 5 dargestellt. Im Bereich des Permeatübertrittes 7 sind die Membrantaschen 2 jeweils mit einer Steckleiste 6 ausgestattet, wobei die Steckleiste innerhalb der Membrantaschen 2 angeordnet ist und in direktem Kontakt mit der Drainageschicht 3 steht und wobei die Membran 4 um die Stirnseite 14 der Steckleiste 6 herumgelenkt ist. Die Steckleiste 6 weist einen in die Aufnahmebohrung 11 der Sammelleitung 1 eingesetzten Rohrstutzen 12 auf und dient der besseren Formstabilisierung. Um einen Übertritt von Trenngut in den Permeatraum wirksam zu vermeiden, ist die Membrantasche 2 im Bereich des Permeatübertrittes 7 über die Steckleiste 6 mit Hilfe einer Clipbefestigung 8 mit der Sammelleitung 1 verbunden. Zur noch weitergehenden Abdichtung der kritischen Stelle des Permeatübertrittes ist in der Figur gezeigt, daß gegebenenfalls noch ein Dichtungsring 9 zwischen Membrantasche 2 und Sammelleitung 1 eingebracht werden kann. Die Clipbefestigung 8 hält die Membrantasche 2 über die Stützleiste 6 mittels an den Rohrstutzen 12 angeformter, mit Einrastvorständen 10 versehenen federelastischen Elementen 13 in der Sammelleitung 1 fest.

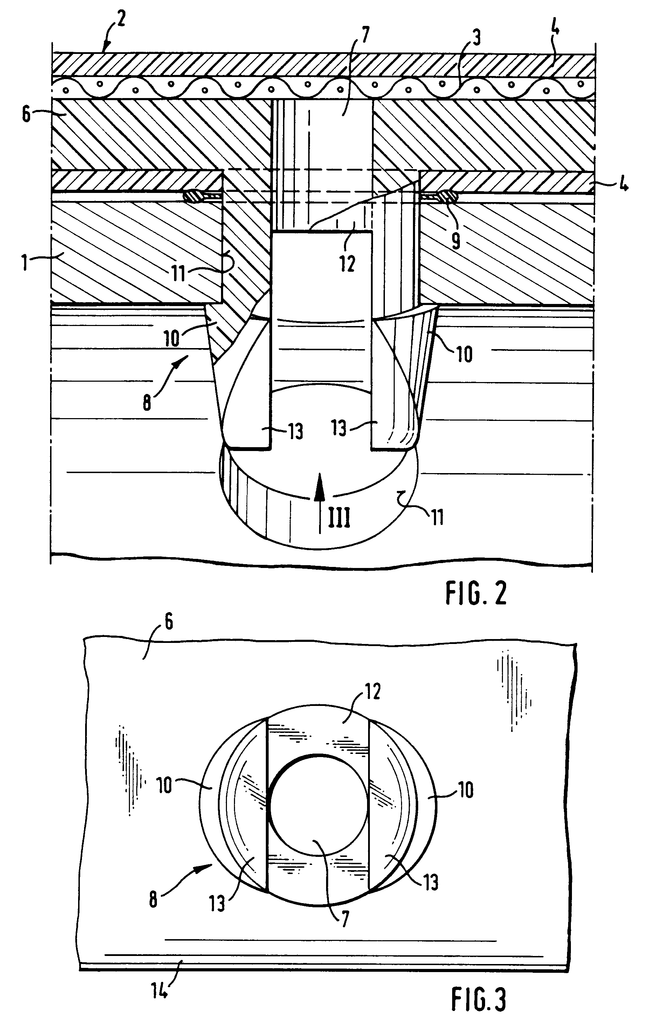

Figur 2 zeigt einen Schnitt nach der Linie II-II in Figur 1. Aus dieser Sicht erscheint die Wandung der Sammelleitung 1 nicht rund, sondern als Flächengebilde, wobei man sich die Wölbung der Sammelleitung 1 allerdings als aus der Papierebene herausragend vorzustellen hat. In Figur 2 tragen gleiche Elemente gleiche Bezugsziffern. Es ist hier erkennbar, daß die Clipbefestigung 8 durch Einrastvorstände 10, angeordnet an gegenüberliegenden Seiten der Clipbefestigung 8, an der inneren Wandung der Sammelleitung 1 befestigt bzw. eingerastet wird. Die Clipbefestigung 8 besteht aus elastischem Material, z. B. aus Kunststoff, und ihr Außenquerschnitt verjüngt sich nach ihrem unteren Ende hin. Dadurch wird gewährleistet, daß die Clipbefestigung 8 beim Einsetzen in die Aufnahmebohrung 11 der Sammelleitung 1 elastisch ihren Außendurchmesser verformt und, sobald der Einrastvorstand 10 sich über die Innenwandung der Sammelleitung 1 schiebt bzw. in Richtung zum Inneren der Sammelleitung 1 hin die Aufnahmebohrung 11 verläßt, wieder in ihre ursprüngliche Form zurückspringt, so daß die Clipbefestigung 8 durch den Einrastvorstand 10 in ihrer Lage fixiert wird. Durch den Dichtungsring 9 wird eine zusätzliche Absicherung bewirkt, die verhindert, daß das Permeat durch Trenngut verunreinigt werden kann.

In Figur 3 ist eine Clipbefestigung 8 in einer um 90° gedrehten Ansicht dargestellt, in der die Längsachse der Clipbefestigung 8 senkrecht auf der Papierebene steht (vgl. Blickrichtungspfeil III in Figur 2). Man erkennt zentral angeordnet den Permeatübertritt 7, seitlich die federelastischen Elemente 13 mit daran angeordneten Einrastvorständen 10, welche an dem Rohrstutzen 12 der Steckleiste 6 angebracht sind.

## Patentansprüche

1. Vorrichtung zur Durchführung von Membrantrennprozessen, umfassend ein Gehäuse, wenigstens eine innerhalb des Gehäuses angeordnete spiralförmig aufgewickelte Membrantasche (2), die wenigstens eine Drainageschicht (3) und beidseitig auf dieser aufgebrachte, semipermeable Membranen (4) enthält, einen Abstandshalter (5) zwischen den einzelnen Wickellagen der Membrantasche (2), eine Sammelleitung (1), die zentral angeordnet ist, eine erste stirnseitige Öffnung als Einlaß für das zu trennende Gut, eine zweite stirnseitige Öffnung als Auslaß für das Konzentrat sowie eine Ableitung für das in die Sammelleitung gelangte Permeat, dadurch gekennzeichnet, daß der übertritt des Permeates aus der Membrantasche (2) in die Sammelleitung (1) mit Hilfe federelastischer Elemente (13) von dem mit zu trennendem Gut angefüllten Raum dichtgehalten wird und daß die semipermeablen Membranen (4). in den seitenrandnahen Bereichen der Membrantasche (2) durch Schweißnähte miteinander verbunden sind.

2. Vorrichtung nach Anspruch 1, dadurch gekennzeichnet, daß wenigstens zwei, vorzugsweise vier bis acht, Membrantaschen (2) innerhalb des Gehäuses spiralförmig aufgewickelt sind.

3. Vorrichtung nach Anspruch 1 oder 2, dadurch gekennzeichnet, daß als Drainageschicht (3) fluiddurchlässige Flächengebilde wie Schwammkörper, Gewebe, Vliese, Fasergeflechte und ähnliche geeignet sind, die die Eigenschaft aufweisen, daß sie einem durch sie hindurchströmenden Medium wenig Widerstand entgegensetzen.

4. Vorrichtung nach einem der Ansprüche 1 bis 3, dadurch gekennzeichnet, daß zwischen den Windungen der Membrantaschen (2) Abstandshalter (5) angeordnet sind, die aus dem gleichen oder aus ähnlichem Material bestehen wie die Drainageschicht (3) im Innern der Membrantaschen (2).

5. Vorrichtung nach einem der Ansprüche 1 bis 4. dadurch gekennzeichnet, daß semipermeable symmetrische, asymmetrische und/oder integralasymmetrische (thin film composite) Membranen aus Kunststoff wie z. B. aus verschiedenen Polyamiden, Polyimiden, Polysulfonen oder Polyethersulfonen, Celluloseacetat, Celluloseregenerat geeignet sind.

6. Vorrichtung nach einem der Ansprüche 1 bis 5, dadurch gekennzeichnet, daß die Schweißnähte an den Rändern der Membrantaschen (2) durch Hitzebeaufschlagung, Ultraschall- oder Hochfrequenzerzeugung hergestellt sind.

7. Vorrichtung nach einem der Ansprüche 1 bis 6, dadurch gekennzeichnet, daß im Bereich des Permeatübertrittes (7) die Membrantaschen (2) jeweils mit einer Steckleiste (6) ausgestattet sind.

8. Vorrichtung nach einem der Ansprüche 1 bis 7, dadurch gekennzeichnet, daß die Membrantaschen (2) im Bereich des Permeatübertrittes (7) mit Hilfe einer Clipbefestigung (8) mit der Sammelleitung (1) verbunden sind.

9. Vorrichtung nach einem der Ansprüche 1 bis 8, dadurch gekennzeichnet, daß zur besseren Abdichtung des Permeatübertrittes (7) ein Dichtungsring (9) zwischen Membrantasche (2) und Sammelleitung (1) angeordnet ist.

10. Vorrichtung nach einem der Ansprüche 1 bis 9, dadurch gekennzeichnet, daß die Clipbefestigung (8) durch seitlich angeordnete Einrastvorstände (10) an der inneren Wandung der Sammelleitung (1) festgehalten wird.

## Claims

1. An apparatus for carrying out membrane separation processes, comprising a housing, at least one spirally wound-up membrane pocket (2) arranged within the housing and containing at least one drainage layer (3) and semipermeable membranes (4) applied to both sides thereof, a spacer (5) between the individual wound plies of the membrane pocket (2), a centrally arranged collection line (1), a first end-face opening as an inlet for the material to be separated, a second end-face opening as an outlet for the concentrate and a discharge line for the permeate which has passed into the collection line, wherein the permeate passage from the membrane pocket (2) into the collection line (1) is kept sealed by means of spring-elastic elements (13), from the space filled with the material to be separated, by means of spring-elastic elements, and wherein the semipermeable membranes (4) are mutually joined by weld seams in the membrane pocket (2) regions adjacent to the side edges.

2. The apparatus as claimed in claim 1, wherein at least two and preferably four to eight membrane pockets (2) are spirally wound up within the housing.

3. The apparatus as claimed in claim 1 or 2, wherein a suitable drainage layer (3) is a fluid-permeable sheet-like structure such as a sponge body, woven fabric, non-woven, fiber braiding and the like, which has the property of exerting little resistance to a medium flowing through it.

4. The apparatus as claimed in any of claims 1 to 3, wherein spacers (5) which can be made of a material the same as or similar to that of the drainage layer (3) in the interior of the membrane pockets (2), are arranged between the windings of the individual membrane pockets (2).

5. The apparatus as claimed in any of claims 1 to 4, wherein a suitable membrane is a semipermeable symmetrical, asymmetrical and/or integral-asymmetrical (thin film composite) membrane of plastic such as, for example, of various polyamides, polyimides, polysulfones or polyethersulfones, cellulose acetate or regenerated cellulose.

6. The apparatus as claimed in any of claims 1 to 5, wherein the weld seams at the edges of the membrane pockets (2) have been made by exposure to heat or by ultrasonic or high-frequency generation.

7. The apparatus as claimed in any of claims 1 to 6, wherein the membrane pockets (2) are each provided with an insertion strip (6) in the region of the permeate passage (7).

8. The apparatus as claimed in any of claims 1 to 7, wherein the membrane pockets (2) are joined in the region of the permeate passage (7) by means of a clip fastener (8) to the collection line (1).

9. The apparatus as claimed in any of claims 1 to 8, wherein, to improve the seal of the permeate passage (7), a sealing ring (9) is provided between the membrane pocket (2) and the collection line (1).

10. The apparatus as claimed in any of claims 1 to 9, wherein the clip fastener (8) is retained on the inner wall of the collection line (1) by laterally arranged snap-in projections (10).

## Revendications

1. Appareil pour réaliser une opération de séparation par membrane, comprenant un carter, au moins une poche membranaire enroulée en spirale (2), disposée à l'intérieur du carter et contenant au moins une couche de drainage (3) avec des membranes semiperméables (4) appliquées sur ses deux faces, une pièce d'écartement (5) entre les enroulements individuels de la poche membranaire (2), un collecteur central (1), une première ouverture frontale pour l'admission de la matière à séparer, une deuxième ouverture frontale pour la sortie du concentré, ainsi qu'une conduite de décharge pour le perméat provenant du collecteur, caractérisé en ce que le passage du perméat de la poche membranaire (2) dans le collecteur (1) est maintenu étanche, par rapport a l'espace rempli par le produit à séparer, au moyen d'éléments résilients (13), et que les membranes semiperméables (4) sont liées entre elles par des joints scellés, dans les zones proches des bords de la poche membranaire (2).

2. Appareil selon la revendication 1, caractérisé en ce qu'au moins deux, de préférence quatre à huit, poches membranaires (2) sont enroulées en spirale au sein du carter.

3. Appareil selon la revendication 1 ou 2, caractérisé en ce que des couches de drainage (3) appropriées sont constituées par des structures planes perméables aux fluides, telles que des corps spongieux, des tissus, des non-tissés, des tissus fibreux et similaires, qui présentent la propriété d'opposer une faible résistance a un courant les parcourant.

4. Appareil selon une des revendications 1 à 3, caractérisé en ce que, entre les enroulements des poches membranaires (2), sont disposées des pièces d'écartement (5) qui se composent du même matériau ou d'un matériau identique à celui de la couche de drainage (3) à l'intérieur des poches membranaires (2).

5. Appareil selon une des revendications 1 à 4, caractérisé en ce que les membranes appropriées sont des membranes semiperméables symétriques, asymétriques et/ou asymétriques intégrales (composite à film mince) en matière synthétique, telle que p.ex. en divers polyamides, polyimides, polysulfones ou polyéthersulfones, en acétate de cellulose ou en cellulose régénérée.

6. Appareil selon une des revendications 1 à 5, caractérisé en ce que les joints scellés sont réalisés, sur les bords des poches membranaires (2), par la chaleur, les ultrasons ou la haute fréquence.

7. Appareil selon une des revendications 1 à 6, caractérisé en ce que les poches membranaires (2) sont pourvues chacune d'une bande d'insertion (6) dans la région de passage (7) du perméat.

8. Appareil selon une des revendications 1 à 7, caractérisé en ce que les poches membranaires (2) sont reliées au collecteur (1), dans la région de passage du perméat (7), au moyen d'une fixation par collier (8).

9. Appareil selon une des revendications 1 à 8, caractérisé en ce qu'une bague d'étanchéité (9) est disposée entre la poche membranaire (2) et le collecteur (1) pour améliorer l'étanchéité du passage du perméat (7).

10. Appareil selon une des revendications 1 à 9, caractérisé en ce que la fixation par collier (8) est maintenue a la paroi interne du collecteur (1) par des doigts d'encliquetage (10) disposés latéralement.
